# EUROPÄISCHE PATENTANMELDUNG

(11) **EP 4 717 338 A1**
(43) Veröffentlichungstag der Anmeldung: **01.04.2026**
(21) Anmeldenummer: 25204819.4
(22) Anmeldetag: 26.09.2025
(51) Int. Cl.: B01D 3/28, B01D 53/18, B01J 19/32

(54) **STRUKTURIERTE METALLDRAHTVORRICHTUNG ALS PACKUNG FÜR VERFAHRENSTECHNISCHEN ANWENDUNGEN**

(30) Priorität: 28.09.2024 DE 202024001869 U
(71) Anmelder: Hoffmann, Alfred, 46562 Voerde (DE); Lessmann, Jürgen, 86720 Nördlingen (DE); Pavone, Domenico, 44797 Bochum (DE); Abraham, Ralf, 59192 Bergkamen (DE)
(72) Erfinder: Hoffmann, Alfred, 46562 Voerde (DE); Lessmann, Jürgen, 86720 Nördlingen (DE); Pavone, Domenico, 44797 Bochum (DE); Abraham, Ralf, 59192 Bergkamen (DE)
(74) Vertreter: Schmid, Wolfgang

(57) **Zusammenfassung**

Bei einer Vorrichtung (1) zur Verbesserung des Stoff- und Wärmeaustausches in Packungskolonnen (4) bei unterschiedlichen Betriebszuständen werden rohrartige strukturierte Metalldrahtvorrichtungen (3, 7, 12) als Packungen zum Betreiben der Packungskolonnen (4) verwendet.

## Beschreibung

Strukturierte Packungen werden seit ca. 50 Jahren innerhalb der chemischen und thermischen Verfahrenstechnik, Abwasser- und Abluftreinigung in speziellen Wärme- und Stoffaustauschkolonnen angewendet.

In diesem Technologiebereich werden Trennprozesse wie Absorption, Destillation, Rektifikation und Extraktion sehr häufig eingesetzt. Hierbei werden, zur Erhöhung der Stoff- und/der Wärmeaustauschflächen zwischen einer gas- bzw. dampfförmigen Phase und einer Flüssigkeit oder flüssigen-flüssigen Phasen innerhalb einer Trennkolonne, Einbauten wie Füllkörper und/oder strukturierte Packungen positioniert. Zweck dieser Einbauten ist es, die Phasen gleichmäßig über den Kolonnenquerschnitt zu verteilen und eine maximale Flüssigkeitsoberfläche für den Stoff- und Wärmeaustausch zu realisieren.

In Füllkörperkolonnen wird stets ein kontinuierlicher Stoff- und Wärmeaustausch angestrebt und sie sind auch nicht mit einzelnen Böden, wie z.B. Bodenkolonnen ausgerüstet, sondern besitzen über die gesamte Kolonnenhöhe eine durchgehende Füllkörperschicht. Die Füllkörper können, je nach Aufgabenstellung, aus unterschiedlichsten Geometrien, spezifischen Oberflächen und Materialien (Metall, Keramik, Kunststoff) geformt sein. Hauptsächlich werden als Füllkörper sogenannte Raschig-Ringe, Pall-Ringe oder Sattelkörper verwendet. Im Vordergrund des verfahrenstechnischen Prozesses steht auf jeden Fall eine kontinuierliche und gleichbleibende Berieselung der Füllkörperoberflächen, um möglichst lange Verweilzeiten zwischen Gas bzw. Dampf und Flüssigkeit zu erreichen. Die gleichmäßige Beaufschlagung über den Querschnitt der Kolonne und die Verteilung der Flüssigkeit über die gesamte Kolonne wird als sehr anspruchsvolle Forderung angesehen, die nach wie vor im Mittelpunkt von Optimierungsmaßnahmen bei Forschung und Entwicklung steht.

Es ist von Füllkörperkolonnen bekannt, dass trotz gleichmäßiger Aufgabe, die herabrieselnde Flüssigkeit, aufgrund des hohen Lückengrades am Rand, immer in Richtung der Kolonnenwand strömt, und der Kern der Füllkörperschicht wird gar nicht oder nur teilweise beaufschlagt. Bei abnehmender Flüssigkeitsbeaufschlagung wird dieser nachteilige Effekt sogar noch verstärkt. Hierbei ist zu beachten, dass die sogenannten Kriechströmungen oder auch Bachbildungen, hervorgerufen durch Randgängigkeit, zwar eine schmale Randzone darstellen, aber über den Umfang betrachtet einen großen Anteil vom Kolonnenquerschnitt belegen können. Dieses Phänomen wird im Bereich der Kolonnentechnologie auch als Maldistribution bezeichnet.

Die in Packungen häufig auftretenden Effekte der Randgängigkeit und Kanalbildung mit anschließender axialer und radialer Maldistribution haben häufig derart drastische negative Auswirkungen, dass die geforderte und garantierte Trennleistung einer Kolonne nicht erreicht wird. Fast alle bekannt gewordenen Versagensfälle von Packungskolonnen lassen sich auf die Maldistribution zurückführen [M. Gann, Chem. Ing. Tech. 64 (1992) 1, S. 6-16].

Die Maldistribution vermindert den Stoffübergang in Füllkörperkolonnen erheblich. Daher wird, nach bekanntem Stand der Technik, je nach Kolonnengröße, alle 2-4 m, die Füllkörperpackung unterbrochen, die Flüssigkeit am Rand gesammelt und neu verteilt.

Diese Prozedur der Neuverteilung ist sehr aufwändig, weil zusätzliche Aufnahmeroste, Sammel- und Vorrichtungen zum Verteilen der Flüssigkeit benötigt werden. Diese mehrfachen Maßnahmen erhöhen die Bauhöhen der Füllkörperkolonnen enorm, außerdem kommt noch hinzu, dass die Kosten für die jeweiligen zusätzlichen Aufnahme-, Sammel- und Verteilvorrichtungen meistens höher liegen als die Füllkörperschüttung selbst.

Weiterhin ist bekannt, dass die Trennwirkung von Füllkörperkolonnen im unteren Belastungsbereich ziemlich niedrig ist. Durch Annäherung an den Flutpunkt wird sie kontinuierlich besser. Dies hängt damit zusammen, dass sich innerhalb der Füllkörperschüttung eine ausgeprägte turbulente Sprüh- und Sprudelschicht bildet, die den Stoffaustausch positiv beeinflussen. Die Verbesserung der Trennwirkung durch Annäherung an den Flutpunkt kann aber nur durch Erhöhung des Druckverlustes erzielt werden. Nachteilig hierbei ist, dass Füllkörper, die in Kolonnen eingesetzt werden, schon aufgrund der nachteiligen Strömungsgeometrie (Widerstandsbeiwert) von vornherein hohe Druckverluste aufweisen.

Innerhalb der chemischen und thermischen Verfahrenstechnik, aber auch in anderen anspruchsvollen Technologiebereichen werden Vorrichtungen, die mit definierten und reproduzierbaren Kontaktflächen ausgerüstet sind, seit einigen Jahrzehnten immer mehr eingesetzt. Diese sogenannten "strukturierten Packungen", haben aufgrund ihrer vorteilhaften Eigenschaften, wie z.B. geringer Druckverlust, hohe Effizienz und Leistungsfähigkeit die etablierten Füllkörperschüttungen in vielen Gebieten verdrängt. Sie repräsentieren, gemeinsam mit den optimierten Ausführungen dieser Gattung, derzeit den aktuellsten Stand der Technik.

Aufgrund des geringen Druckverlustes sind strukturierte Packungen prädestiniert für Anwendungen bei flüchtigen Chemikalien. Zusätzlich erlauben sie auch höhere Durchsatzraten und als Folge kleinere Kolonnenabmessungen als Boden- oder Füllkörperkolonnen. Zudem besteht auch keine Gefahr von "Wirbelschichtbildung" und Materialaustrag bei Überschreitung des Flutpunktes.

Allerdings ist die Herstellung von konventionellen strukturierten Packungen erheblich kostenintensiver und aufwändiger als die Produktion von Füllkörperschüttungen. In "Prozesstechnik Online" vom 11.12.2015 wird von 10.000 bis 20.000 Schweißpunkte pro Kubikmeter, je nach Einsatzbereich, bei der Herstellung von strukturierten Packungen berichtet.

Hier setzt die Erfindung an, es hat sich überraschenderweise gezeigt, dass strukturierte Metalldrahtvorrichtungen, ähnlich wie die konventionellen strukturierten Packungen, in Kolonnen für unterschiedliche Einsatzzwecke erfolgreich verwendet werden können. Sie besitzen aber erhebliche Vorteile im Vergleich zu diesen, nämlich, dass die Herstellung sehr viel einfacher als bei den strukturierten Packungen gestaltet werden kann. Weiterhin können die Drähte, zur Erzielung einer großen Austauschfläche, immer wieder zu vielfältigen Geometrien mit nahezu beliebigen Durchmessern, Längen, Lückengrade und spezifischen Oberflächen geformt werden. Der Aufbau der Drähte kann beliebig horizontal, vertikal oder in bestimmten Winkelanordnungen innerhalb der Kolonne erfolgen. Zur Erreichung von sehr großen Längen können diese rohrförmigen Metalldrahtvorrichtungen aneinandergehängt werden. In Summe kann festgestellt werden, dass diese neuartigen Packungsstrukturen in ihrer Vielfältigkeit ein geeignetes Mittel sind, verschiedenste Anforderungen bezüglich Durchmesser und Kolonnenlänge abzudecken und erheblich günstiger bei der Produktion und bei einem Austausch sind (einfach aus dem Reaktor herauszuziehen). Zudem bieten diese tendenziell einen geringeren Druckverlust bei gleicher Oberfläche als vergleichbare Packungen mit ähnlichen Lückengraden und spezifischen Oberflächen, aber einen erheblich geringeren Druckverlust als Füllkörperschüttungen.

Ein weiterer großer Vorteil und einfache Maßnahme zur Vermeidung von Kriechströmungen und Bachbildung im Randbereich, die sich mit dieser neuartigen Packungsvorrichtung bietet ist, dass diese flexibel mit einem größeren Außendurchmesser als der Innendurchmesser der Kolonnen geformt werden können, sodass sich beim Einbau eine Presspackung ergibt und im Randbereich die Drähte der Vorrichtung gestaucht werden und der Druckverlust lokal am Rand erhöht wird und somit Fehlströmungen vermieden werden. Ein weiterer Gewinn dieser Anordnung ergibt sich durch die Selbst-Arretierung des größeren Durchmessers innerhalb der Kolonnen. Als Folge spart man zusätzliche notwendige Aufnahme- und Verteilvorrichtungen für die flüssige Phase und nicht zuletzt wird die Bauhöhe der Kolonnen erheblich reduziert. D.h. die sonst unbedingt erforderlichen Haltevorrichtungen für lose Füllkörper und gewöhnlichen Packungskolonnen können hier ganz entfallen. Wichtig ist hierbei zu erwähnen, dass die ansonsten benötigten Trag- und Niederhalterost einer sehr gründlichen Vorauswahl benötigen, weil bei Fehlfunktion die Fluiddynamik ungünstig beeinflusst wird. Durch Vermeidung der sehr nachteiligen Randgängigkeit, Kanalbildung sowie Verzicht auf Zusatzeinbauten erhält man eine sehr gleichmäßige Flüssigkeitsbeaufschlagung innerhalb der Kolonnen.

Zielstellung der Erfindung ist es also, den Stoff- und Wärmeaustausch innerhalb von Kolonnen, die im Bereich der chemischen und thermischen Verfahrenstechnik sowie in der Abgasreinigung verwendet werden, zu verbessern. Diese Aufgabe wird durch die in Anspruch 1 genannten Merkmale gelöst. Es werden rohrartige strukturierte Metalldrahtvorrichtungen als Packungen zum Betreiben der Packungskolonnen verwendet. Die Kolonnen werden mit rohrförmigen strukturierten Metalldrahtvorrichtungen als Packungseinbauten, die als Austauschpackung fungieren, ausgerüstet.

Durch diese Einbauten wird erreicht, dass durch deren Einsatz eine erheblich große Oberfläche für den Stoff- und Wärmeaustausch zwischen gas- bzw. dampfförmigen sowie flüssigen Phasen, bei gleichzeitiger Vermeidung von Maldistribution, zur Verfügung gestellt werden kann.

Eine besondere Ausgestaltung der Erfindung besteht darin, dass diese erfindungsgemäßen strukturierten Metalldrahtpackungen, im Vergleich zu anderen Optionen, die in derartigen Packungskolonnen bzw. Kolonnen verwendet werden, einen weitaus geringeren Druckverlust verursachen und somit mit höheren Geschwindigkeiten und damit Beladungen betrieben werden können. Das Einbringen und Verteilung der Flüssigkeit, im Kopfbereich der Kolonnen, kann, wie gewohnt und bewährt, entsprechend dem Stand der Technik erfolgen, weil die gleichförmige Ausbildung der strukturierten Metalldraht-Kolonnenpackung für eine gleichmäßige Verteilung der einzelnen Phasen innerhalb der Kolonne sorgt. Fortlaufende Sammlung und Verteilung der Flüssigkeit im Randbereich der Kolonne entfällt, weil die Randgängigkeit, wie bereits beschrieben, durch konstruktive Maßnahmen nahezu ausgeschlossen werden kann.

Aus diesen vorteilhaften Geometrien von strukturierten Metalldrahtvorrichtungen lassen sich vielfältige andere strukturierte Packungs-Geometrien zur Durchführung von verfahrenstechnischen Aufgaben ableiten.

Beispielsweise ist es möglich, aus den Metalldrähten Segmente mit unterschiedlichen Durchmessern, Höhen, Lückengrade und spezifischen Oberflächen zu produzieren. Diese sind vornehmlich längs zur Strömungsrichtung angeordnet und die einzelnen Drähte/Adern weisen eine Wellung in ein oder zwei Ebenen auf. Durch diese Wellung sind die alternativen Packungen bezogen auf mindestens den Durchmesser federelastisch und werden im unbelasteten Zustand etwas größer gefertigt als der Kolonnendurchmesser.

Durch das Einbringen in die Kolonne werden die alternativen Packungen etwas zusammengedrückt und schließen daher dicht mit dem Innendurchmesser der Kolonne ab und verhindern durch diese Komprimierung im äußeren Packungsbereich effektiv die Randgängigkeit.

Es können die alternativen Packungen auch wie Metallschwämme geformt sein, die für die Reinigung von Töpfen verwendet werden, nur erheblich größer ausgeführt. Diese Segmente können zu Modulen zusammengefasst und innerhalb von Kolonnen, ähnlich wie die vorgenannten strukturierten Metalldrahtvorrichtungen, zur Durchführung von verfahrenstechnischen Operationen, eingesetzt werden. Zusätzlich können sie mit sogenannten Führungsbohrungen, zur Vereinfachung von Montage, Befestigung und zum Betreiben versehen werden.

Es besteht aber auch die Möglichkeit, aus Metalldrahtgewebe rohrförmige Packungen zu formen, hierbei sind die Parameter bezüglich Werkstoff, Drahtdicke. Geometrie und verfahrenstechnische Merkmale (Lückengrad, spezifische Oberfläche) in einem weiten Bereich frei wählbar.

Ein weiterer Vorteil, dieser erfindungsgemäßen Vorrichtung ist, dass durch den ausgesprochenen erheblich kleineren Druckverlust als andere vergleichbare strukturierten Packungen, der Opex-Anteil niedrig gehaltenen werden kann, zudem ist es möglich erheblich höhere spezifischen Oberflächen, bei kleinen Gesamtabmessungen dieser Ausrüstung zu produzieren, sodass vergleichsweise sehr kompakte Kolonnen hergestellt werden können (Capex).

Weiterhin ist bekannt, dass alle Kolonnen am Gasaustritt oben Tropfenabscheider als Sicherheitsschaltung zur Vermeidung von Tropfenmitriss, u.a. bei Fahrweise am Limit, wie Staupunkt & Flutpunkt, erfordern. Ein Nachteil ist, dass damit sie angemessen funktionieren, sehr hohe spezifische Oberflächen und Strömungsgeschwindigkeiten benötigen und verursachen damit hohe kostenintensive Druckverlustbeiträge. Aufgrund der Tatsache, dass diese erfindungsgemäßen neuartigen strukturierten Metalldrahtpackungen, einfach mit sehr hohen spezifischen Oberflächen bei vergleichsweise niedrigen Druckverlustwerte zur Verfügung gestellt werden können, bieten sie sich ebenfalls als Tropfenabscheider in Kolonnen an.

Optional kann die alternative Packung auch neben der Funktion der großen Phasengrenzfläche für den Stoff- und Wärmeaustausch auch aktiv Wärme zuführen, indem die Drähte/Adern ganz oder teilweise als Widerstandsdrahtheizung ausgeführt werden. Die definierte Länge und Verteilung der gewellten Drähte/Adern gewährleistet einen über den Radius und die Länge der Packung gleichmäßige Wärmetönung und damit die Einhaltung eines optimalen Temperaturfensters für zum Beispiel eine sehr effektive Desorption.

Ein weiterer Vorteil ist der Entfall oder zumindest deutliche Verkleinerung der sonst zur Fluidbeheizung, zum Beispiel im Desorber, notwendigen separaten Einheit Wärmetauscher, welche üblicherweise mittels Niederdruckdampf beheizt sind.

Zudem wird die Wärme exakt dort zugeführt, wo diese gebraucht wird. Die grundsätzlich bereits vorhandene sehr große Oberfläche zum Stoffaustausch gewährleistet zudem eine energiesparende und schonende Energiezufuhr mittels möglichst erneuerbarem Strom.

Die o.g. optionale elektrische Beheizung der alternativen Packung mittels Widerstandsdraht kann auch bei katalytischen Prozessen zur Wärmezufuhr verwendet werden. Hierbei ist das wesentliche Ausführungsmerkmal, dass es keine wesentliche weitere Wärmezufuhr, zum Beispiel mittels Brennern, notwendig ist und zudem ist die radial über den Reaktordurchmesser und über die Reaktorlängsachse eingebrachte Wärmemenge gleichmäßig verteilt. Weitere Vorteile, Einzelheiten und Merkmale der Erfindung ergeben sich aus der nachfolgenden Beschreibung sowie anhand der Zeichnungen, diese zeigen in:
Fig. 1 eine vereinfachte Skizze der erfindungsgemäßen strukturierten Metalldrahtpackung,
Fig. 2 eine vereinfachte Abbildung von runden strukturierten Metalldrahtsegmenten, die zu einem Stapel montiert und in die Kolonnen eingebracht werden können,
Fig. 3 eine Darstellung einer rohrförmigen Packung bestehend aus Metalldrahtgewebe
Fig. 4 eine vereinfachte Skizze eines Desorbers, mit direkter elektrischer Widerstandsbeheizung der erfindungsgemäßen strukturierten Metalldrahtpackung.

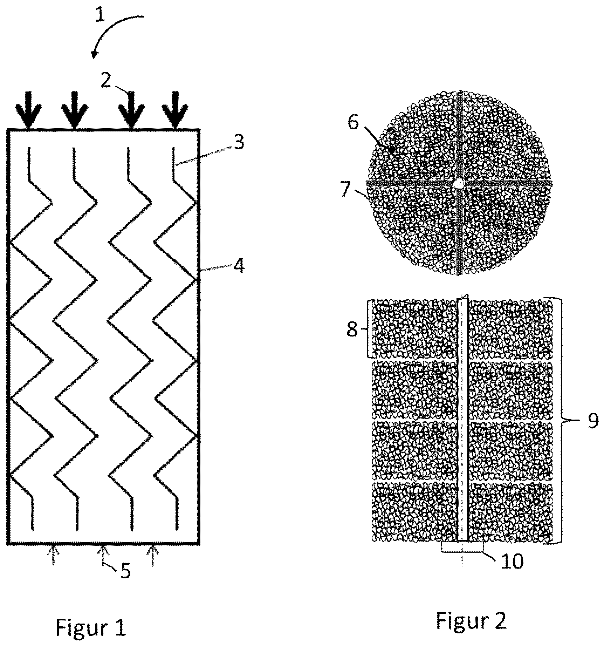

In Figur 1 wird mit 1 die erfindungsgemäße rohrartige strukturierte Metalldrahtvorrichtung bzw. strukturierte rohrförmige Metalldrahtpackung skizziert. Die Waschlösung wird in 2 eingebracht, sinnvollerweise direkt oberhalb der Drähte/Adern. Die gewellten Drähte/Adern sind mit 3 und die Austauschkolonne ist mit 4 gekennzeichnet. Hier erfolgt, die möglichst optimale Reaktion zwischen Waschflüssigkeit 2 und Abgas 5.

In Fig. 2 wird mit 6, 7 eine ähnliche alternative Packung, wie unter Fig. 1 beschrieben, dargestellt. Es werden Metallschwämme zu Segmenten 8 geformt und zu Stapel/Modulen 9 zusammengefasst. Zur Vereinfachung der Montage/Demontage/Betrieb können Befestigungsstangen oder ähnliches mit Auflager 10 verwendet werden.

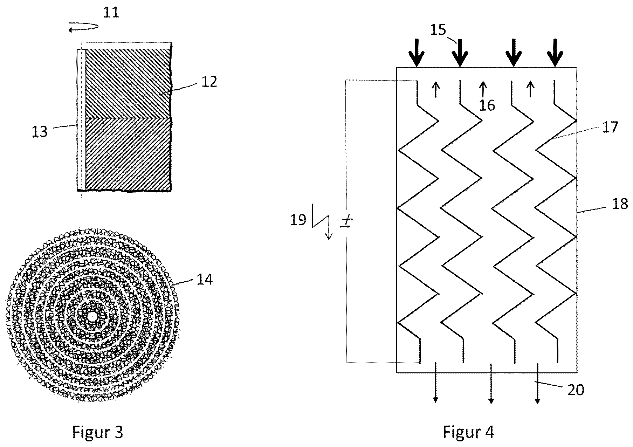

In Fig. 3 wird eine weitere Alternative zu der Beschreibung gemäß Fig. 1 skizziert. Hierbei werden aus Metalldrahtgewebe 12 rohrförmige Packungen 14 um eine Führungsstange 13 gedreht 11. Es bietet sich aber auch die Möglichkeit "komprimiertes Drahtgestrick" aus hochfesten Stahldrähten, einschließlich Edelstahldrähten, Kupferdrähten, Nickeldrähten und anderen Materialien als Ausgangsmaterial zu verwenden und zu rohrförmigen Metalldrahtpackungen zu formen.

Die Festlegung der Anzahl und Anordnung der Führungs- & Befestigungsstange(n) ist gängige Praxis eines technisch gebildeten Fachmanns und bedarf keine weiteren Erläuterungen. Im Übrigen findet man u. a. hier weitergehende Informationen:
EP 1 628 727 B1 & US 4 744 929.

In Fig. 4 wird ein Desorber 18 skizziert. Es ist bekannt, dass Absorber und Desorber die gleichen Stoff- und Wärmeaustauschvorrichtungen 17 verwenden können. Daher kann die alternative Packung auch neben der Funktion der großen Phasengrenzfläche für den Stoff- und Wärmeaustausch auch aktiv Wärme zuführen, indem die Drähte/Adern 18 ganz oder teilweise als Widerstandsdrahtbeizung 19 ausgeführt werden. Die gesättigte Waschflüssigkeit wird in 15 zur Regeneration eingeleitet und strömt in 20 aus dem Desorber 18 wieder aus. Das separierte Absorbat 16 wird im oberen Bereich des Desorbers ausgetragen. Mit + und - wird die Stromeinspeisung 19 für die konduktive Beheizung definiert.

Die Parameter hinsichtlich Werkstoff, Drahtdicke. Geometrie und verfahrenstechnische Parameter (Lückengrad, spezifische Oberfläche) sind in einem weiten Bereich frei wählbar.

Natürlich sind die beschriebenen Beispiele noch in vielfacher Hinsicht abzuändern und zu ergänzen, ohne den Grundgedanken der Erfindung zu verlassen. Selbstverständlich können diese Vorrichtungen sowohl in Absorbern und Desorbern eingesetzt werden. Sollte die Reaktionen einen äußeren Wärmeinput erfordern, so ist es auch möglich, Elektro-Wärme über diese erfindungsgemäße Vorrichtung zur Verfügung zu stellen (konduktiv/induktiv).

Selbstverständlich betrifft die Erfindung auch das Verfahren zur Optimierung von Packungskolonnen durch Verwendung von strukturierten Metalldrahtvorrichtungen als geordnete Packung für verfahrenstechnische Anwendungen.

### Bezugszeichenliste

| | |
|---|---|
| 1 | Strukturierte Metalldrahtpackung (Vorrichtung für Austauschkolonnen) |
| 2 | Waschflüssigkeit |
| 3 | Draht/Ader als Bestandteil der Metalldrahtpackung |
| 4 | Austauschkolonne (Absorber) |
| 5 | Abgas |
| 6 | Draht für die alternative Struktur einer Drahtpackung (Metallschwämme) |
| 7 | Draufsicht der alternativen Struktur |
| 8 | Segment bestehend aus Metallschwammdraht (hier 1 von 4 abgebildet) |
| 9 | Stapel/Module bestehend aus Segmenten (hier 1 Stapel mit 4 Segmenten) |
| 10 | Befestigungsstange |
| 11 | Richtung der Wendel zur Produktion von rohrförmigen Packungen |
| 12 | Auszug Metalldrahtgewebe für die rohrförmige Wendelproduktion |
| 13 | Führungsstange |
| 14 | Draufsicht der rohrförmigen Packung aus Metalldrahtgewebe |
| 15 | Gesättigte Waschflüssigkeit |
| 16 | Absorbat |
| 17 | Metalldrahtpackung |
| 18 | Desorber |
| 19 | Stromzufuhr |
| 20 | Regenerierte Waschflüssigkeit |

## Patentansprüche

1. Vorrichtung (1) zur Verbesserung des Stoff- und Wärmeaustausches in Packungskolonnen (4) bei unterschiedlichen Betriebszuständen, **dadurch gekennzeichnet, dass** rohrartige strukturierte Metalldrahtvorrichtungen (3, 7, 12) als Packungen zum Betreiben der Packungskolonnen (4) verwendet werden.

2. Vorrichtung nach Anspruch 1, **dadurch gekennzeichnet, dass** die in die Packungskolonnen (4) eingebrachten vertikalen Strukturen (1) aus Drähten und/oder Adern (3) in ein oder zwei Ebenen bezogen auf ihre Längsachse gebogen und/oder geknickt sind.

3. Vorrichtung nach einem der vorgehenden Ansprüche, **dadurch gekennzeichnet, dass** die elastischen Metalldrahtvorrichtungen (1) mit einem größeren Außendurchmesser als der Innendurchmesser der Packungskolonne (4) in diese eingesetzt werden.

4. Vorrichtung nach einem der vorgehenden Ansprüche, **dadurch gekennzeichnet, dass** die Außendrähte (3) der Metalldrahtvorrichtung (1) innerhalb der Packungskolonne (4) gestaucht werden und eine Presspackung mit dem Innendurchmesser der Packungskolonne (4) bilden.

5. Vorrichtung nach einem der vorgehenden Ansprüche, **dadurch gekennzeichnet, dass** die Metalldrahtvorrichtung (1) in einem Desorber (18) zur Regeneration von gesättigter Waschflüssigkeit (15) eingesetzt wird.

6. Vorrichtung nach einem der vorgehenden Ansprüche, **dadurch gekennzeichnet, dass** die Drähte (17) der Metalldrahtvorrichtung (1) im Desorber (18) elektrisch (19) beheizbar sind.

7. Vorrichtung nach einem der vorgehenden Ansprüche, **dadurch gekennzeichnet, dass** die gesättigte Waschflüssigkeit (15) im Kopfteil des Desorbers (18) eingeführt wird, das ausgetriebene Absorbat (16) den Desorber (18) im Kopfteil verlässt und die regenerierte Waschflüssigkeit (20) im unteren Teil des Desorbers wieder im Kreis zur Packungskolonne (4) gefahren wird.
